# FASCICULE DE BREVET EUROPEEN

(11) **EP 0 382 612 B1**
(45) Date de publication et mention de la délivrance du brevet: **15.12.1993**
(21) Numéro de dépôt: 90400290.4
(22) Date de dépôt: 02.02.1990
(51) Int. Cl.: B25J 15/00

(54) **Outil de préhension d'une pièce par télémanipulation**
Fernbedienbarer Greifer für Gegenstände
Remotely actuated article gripper

(30) Priorité: 06.02.1989 FR 8901494
(43) Date de publication de la demande: 16.08.1990
(73) Titulaire: COMMISSARIAT A L'ENERGIE ATOMIQUE, 75015 Paris Cédex 15 (FR)
(72) Inventeur: Brugere, Robert, Montboucher, F-26740 Sauzet (FR); Rios, Joseph, F-84100 Orange (FR); Chevallereau, Roger, F-84100 Bollene (FR); Romanet, Lucien, F-26130 Saint Paul Trois Chateaux (FR)
(74) Mandataire: Mongrédien, André

(56) Documents cités:
- DE-A- 3 441 643
- FR-A- 1 292 013
- GB-A- 432 063
- US-A- 2 861 700
- US-A- 3 051 327

## Description

L'invention a trait à un outil de préhension d'une pièce par télémanipulation.

Dans le brevet EP-A-314564, étant un document auprés Art. 54(3), CBE, publié 03.05.89, on décrit un outil de préhension utilisable notamment pour une fiche de connecteur de fluide ou d'électricité.

Cet appareil comprend d'abord un corps cylindrique et un premier appendice (fourche) dont les deux branches viennent encadrer la partie épaulée (carrée ou cylindrique) de la pièce à saisir.

Un second appendice (coiffe) muni d'une partie conique de centrage de la pièce comporte une ouverture radiale pour le passage du flexible d'alimentation.

Deux étriers (hottes de préhension) sont reliés d'une part au corps de l'appareil, d'autre part à l'un ou l'autre des deux appendices. Le rapprochement des deux étriers sous l'effet des mâchoires de la pièce télémanipulée se traduit par un rapprochement des deux appendices, ce qui permet d'enserrer la pièce à saisir.

Le mouvement des étriers est complexe et comprend également une composante de rotation et une composante de translation axiale, c'est-à-dire parallèlement au coulissement de l'appendice mobile.

On a donc prévu des mécanismes symétriques pour les deux étriers car on évite alors des glissements des étriers sur les mâchoires de la pince au cours du serrage qui nuiraient à la bonne tenue de l'outil, mais l'amplitude du mouvement de serrage de la pince devient importante.

Cet inconvénient peut être évité grâce à un mécanisme amélioré pour convertir le mouvement relatif des étriers en mouvement de coulissement de l'appendice mobile. Un des étriers est maintenant fixé au corps et le mécanisme est conformé de manière à n'autoriser que les translations en sens alterné de l'autre étrier en direction de l'étrier fixe, éliminant toute rotation et toute translation correspondant à un glissement des étriers l'un devant l'autre. Un tel mécanisme de transmission articulé, constitué de deux biellettes inégales et articulées entre elles, est toutefois révélé par le brevet GB-A-432 063 pour une application technique un peu différente (une scierie).

D'après l'invention, les deux biellettes sont remplacées par un mécanisme plus simple qui comprend une came pourvue d'une articulation pour l'étrier mobile et d'une autre articulation pour l'appendice mobile. Cette came a un contour en forme d'arc de cercle dont l'hypothénuse du triangle rectangle constitue un diamètre. Ce contour glisse sur un point fixe du corps.

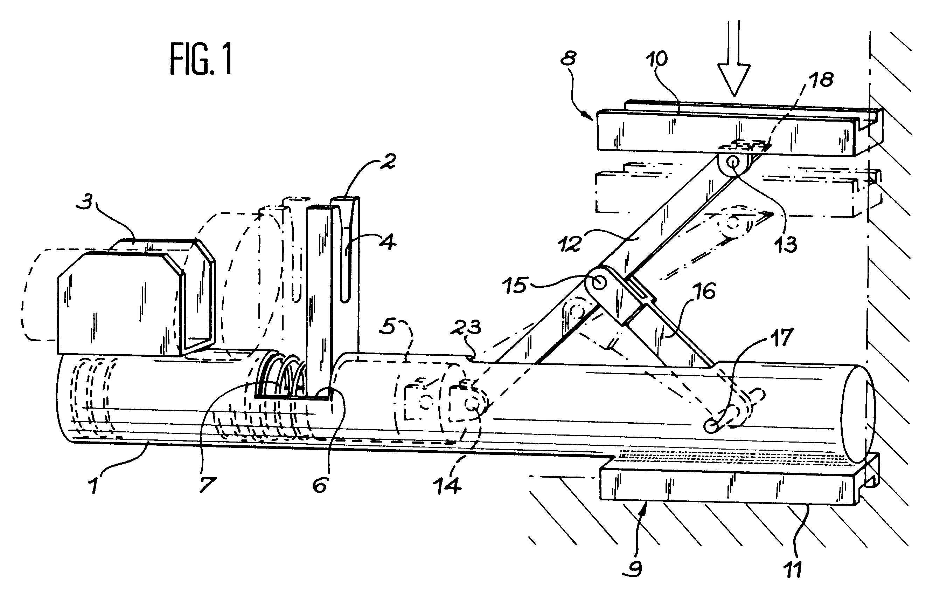

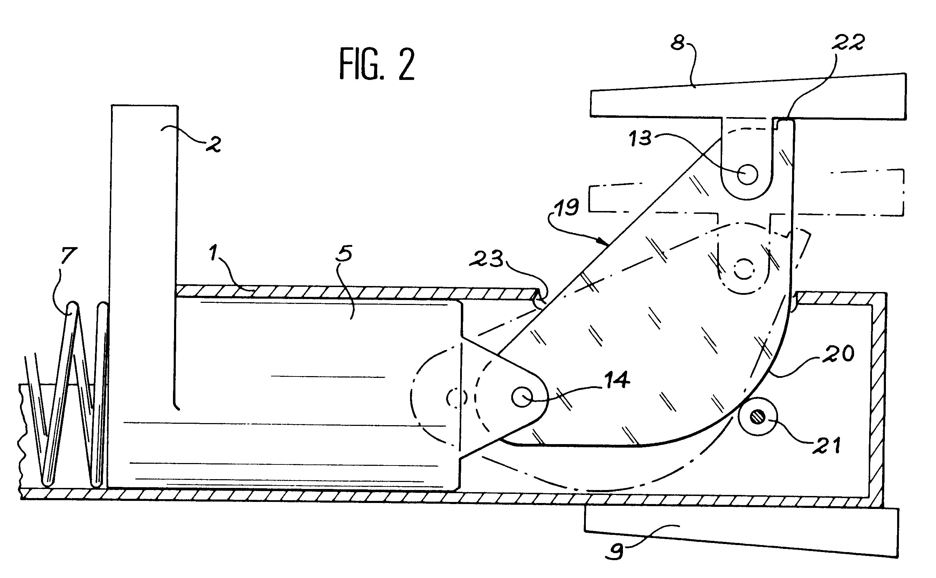

La figure 1 représente l'allure générale d'un outil de préhension équipé d'un mécanisme qui n'appartient pas à l'invention, et la figure 2 représente un mécanisme conforme à l'invention. Ces figures sont données à titre illustratif et non limitatif.

L'outil représenté figure 1 se compose d'un corps 1 en forme de cylindre creux muni de deux appendices 2 et 3 dont le premier 2 est une coiffe qui est ici munie d'une rainure 4 pour laisser passer un éventuel câble à l'arrière de la pièce et qui coulisse le long du corps 1 en suivant les mouvements d'un piston 5 situé dans l'alésage de ce corps 1. Une rainure 6 est établie sur le corps 1 pour permettre à la coiffe 2 de dépasser vers l'extérieur ; la longueur de cette rainure détermine la course de la coiffe 2. Un ressort 7 est logé dans le corps 1 et tend à éloigner la coiffe 2 de la fourche 3.

Un second appendice 3 est constitué d'une fourche soudée à l'extrémité du corps 1. Les deux branches de la fourche 3 viennent encadrer la pièce à saisir. Lors du serrage de la pièce, la coiffe 2 est déplacée vers la fourche 3, vient en butée contre la surface arrière de la pièce qu'elle repousse jusqu'à ce qu'un épaulement de la pièce bute contre les branches de la fourche.

L'invention n'est toutefois pas limitée à cette forme particulière des deux appendices 2 et 3, qui a été conçue pour des fiches de connecteurs de forme sensiblement cylindrique avec un élargissement à l'arrière, entre les appendices 2 et 3, mais peut au contraire s'appliquer à toutes les formes d'appendices aptes à saisir une pièce en se rapprochant.

L'outil comprend également deux étriers dont l'un 8 est mobile et l'autre 9 est soudé au corps 1. Les étriers 8 et 9 sont de part et d'autre du corps 1 et à son extrémité opposée à la griffe 3. Ils sont de forme allongée et des mâchoires d'une pince non représentée sont prévues pour les rapprocher l'un de l'autre en s'appuyant sur leurs faces 10 et 11 opposées au corps 1.

Le mécanisme qui unit l'étrier mobile 8 à la coiffe 2 comprend une grande biellette 12 munie à ses deux extrémités d'une articulation 13 pour l'étrier mobile 8 et d'une articulation 14 pour le piston 5. Le milieu de la grande biellette 12 porte une troisième articulation 15 pour une extrémité d'une petite biellette 16 dont l'autre extrémité porte une articulation 17 à un point fixe sur l'axe du corps 1. La grande biellette 12 comprend une face de butée 18 pour l'étrier mobile 8, orientée de façon que l'étrier 8 en appui sur cette butée 18 se trouve en position parallèle à l'étrier fixe 9 lorsque la coiffe 2 est éloignée de la fourche 3. Le corps 1 est entaillé d'une seconde rainure 23 pour le passage des biellettes 12 et 16.

Les articulations 13 et 14 aux extrémités de la grande biellette 12 et l'articulation 17 de la petite biellette 16 sur le corps 1 sont situées aux coins d'un triangle rectangle dont la grande biellette 12 correspond à l'hypothénuse et la petite biellette 16, deux fois plus courte que la grande 12, correspond à la médiane de l'hypothénuse. Quand on rapproche l'étrier mobile 8 de l'étrier fixe 9, les articulations 13, 14 et 17 restent situées aux coins d'un triangle rectangle, ce qui implique que le mouvement de l'articulation 14 s'effectue parallèlement à l'axe du corps 1 et que celui de l'articulation 13 est perpendiculaire à cet axe et dirigé vers l'articulation 17 fixe sur le corps 1. L'étrier mobile 8 ne se déplace donc pas parallèlement à l'axe du corps 1, et il reste ainsi en face de l'étrier fixe 9. L'articulation 13 permet également de le maintenir par pivotement parallèle à l'étrier fixe 9.

L'outil reste donc fermement maintenu dans les mâchoires de la pince.

La figure 2 représente un mécanisme conforme à l'invention pour relier l'étrier 8 au piston 5 et à la coiffe 2 ; tout en étant différent du précédent, ce mécanisme produit le même effet cinématique. La vue est partielle et ne représente pas certains éléments inchangés par rapport à ceux de la figure 1. Il n'y a plus de biellettes mais on retrouve les deux articulations 13 et 14 pour l'étrier mobile 8 et le piston 5. Ces articulations 13 et 14 sont cette fois établies sur une came 19 dont le contour utile 20 est un arc de cercle glissant sur un galet 21 solidaire du corps 1 et dont une ligne droite joignant les articulations 13 et 14 constituerait un diamètre. Comme précédemment, les articulations 13 et 14 et le point de contact du contour 20 et du galet 21 sont aux coins d'un triangle rectangle. Au mouvement axial de la coiffe 2 et du piston 5 répond donc un mouvement purement radial de l'étrier mobile 8. Le galet 21 tourne autour d'un pivot.

La came 19 est également munie d'une butée 22 pour maintenir l'étrier mobile 8 parallèle à l'étrier fixe 9 en l'absence de serrage par la pince. Il est ainsi possible de saisir plus facilement l'étrier mobile 8.

La came 19 présente sur un mécanisme à biellettes 12 et 16 les avantages d'être plus solide et de conception plus simple.

## Revendications

1. Outil de préhension d'une pièce par télémanipulation comprenant un corps cylindrique (1), un premier appendice (2) coulissant le long du corps (1) et un second appendice (3) fixé au corps (1) de manière à saisir la pièce entre les deux appendices, un premier étrier, un second étrier et un mécanisme (12, 16, 19) reliant le premier étrier (8) au premier appendice (2) pour faire coulisser le premier appendice à partir de mouvements relatifs des étriers, caractérisé en ce que le second étrier (9) est fixé au corps (1) et le mécanisme est une came reliée au premier étrier (8) par une articulation (13) et au premier appendice (2) par une autre articulation (14), la came présentant une portion en arc de cercle (20) dont un diamètre correspond à une ligne joignant les deux articulations (13, 14) et qui glisse sur un point fixe (21) sur le corps.

2. Outil de préhension suivant la revendication 1, caractérisé en ce que point fixe sur le corps est équipé d'un galet (21).

3. Outil de préhension suivant la revendication 1, caractérisé en ce que la came comprend une butée (22) de maintien du premier étrier (8) parallèle au second étrier (9) en position de repos de l'outil.

## Claims

1. Tool for gripping a part by means of remote handling and including a cylindrical body (1), a first lengthening piece (2) sliding along the body (1), and a second lengthening piece (3) secured to the body (1) so as to seize the part between the two lengthening pieces, a first clamp, a second clamp and a mechanism (12, 16, 19) connecting the first clamp (8) to the first lengthening piece (2) so as to make the first lengthening piece slide via the relative movements of the clamps, wherein the second clamp (9) is secured to the body (1) and the mechanism is a cam connected to the first clamp (8) by a joint (13) and to the first lengthening piece (2) by another joint (14), the cam having an arc of a circle section with a diameter corresponding to a line joining the two joints (13, 14) and which slides over a fixed point (21) on the body.

2. Gripping tool according to claim 1, wherein the fixed point on the body is equipped with a roller (21).

3. Gripping tool according to claim 1, wherein the cam includes a stop (22) for keeping the first clamp (8) parallel to the second clamp (9) in the tool rest position.

## Patentansprüche

1. Werkzeug zum Greifen eines Teils durch Fernbedienung, umfassend einen zylindrischen Körper (1), einen ersten Ansatz (2), den Körper (1) entlang gleitend, und einen zweiten Ansatz (3), an dem Körper (1) befestigt, um das Teil zwischen den beiden Ansätzen festzuhalten, einen ersten Bügel, einen zweiten Bügel und eine Einrichtung (12, 16, 19), die den ersten Bügel (8) mit dem ersten Ansatz (2) verbindet, um den ersten Ansatz zu verschieben auf Grund der Relativbewegung der Bügel,
dadurch **gekennzeichnet**,
daß der zweite Bügel (9) an dem Körper (1) befestigt ist und die Einrichtung eine Kurvenscheibe ist, verbunden mit dem ersten Bügel (8) durch ein Gelenk (13), und mit dem ersten Ansatz (2) durch ein anderes Gelenk (14), wobei die Kurvenscheibe einen kreisförmigen Abschnitt (20) aufweist, wovon ein Durchmesser einer die beiden Gelenke (13, 14) verbindenden Linie entspricht, und die an einem festen Punkt (21) auf dem Körper gleitet.

2. Greifwerkzeug nach Anspruch 1, dadurch gekennzeichnet, daß der feste Punkt an dem Körper mit einer Rolle (21) ausgestattet ist.

3. Greifwerkzeug nach Anspruch 1, dadurch gekennzeichnet, daß die Kurvenscheibe einen Anschlag (22) umfasst, der bei Ruhestellung des Werkzeugs den ersten Bügel (8) parallel zum zweiten Bügel (9) hält.
